# EUROPÄISCHE PATENTANMELDUNG

(11) **EP 4 749 023 A1**
(43) Veröffentlichungstag der Anmeldung: **27.05.2026**
(21) Anmeldenummer: 24214844.3
(22) Anmeldetag: 22.11.2024
(51) Int. Cl.: E01C 19/48

(54) **STRASSENBAUMASCHINE ZUM BESPRÜHEN VON BITUMINÖSEN DÄMPFEN SOWIE MATERIALÜBERGABEPROZESS**

(71) Anmelder: Joseph Vögele AG, 67067 Ludwigshafen (DE)
(72) Erfinder: Fickeisen, Steffen, 67098 Bad Dürkheim (DE); Oettinger, Klaus, 68804 Altlußheim (DE)
(74) Vertreter: Grünecker Patent- und Rechtsanwälte PartG mbB

(57) **Zusammenfassung**

Straßenbaumaschine (1), die in Form eines Straßenfertigers (2) oder in Form eines Beschickerfahrzeugs (35) zum Versorgen eines Straßenfertigers (2) mit Einbaumaterial konfiguriert ist, wobei die Straßenbaumaschine (1) einen Materialbehälter (5, 5') zur Aufnahme von Einbaumaterial sowie mindestens eine Sprühvorrichtung (8, 8′, 8ʺ, 8‴) zum Zerstäuben einer Flüssigkeit (9) umfasst, und wobei die Sprühvorrichtung (8, 8′, 8ʺ, 8‴) zum Besprühen von aus dem Materialbehälter (5, 5') aufsteigenden, bituminösen Dämpfen (7), zum Besprühen von aus einem an einer Materialförderbandeinrichtung gebildeten Bereich aufsteigenden, bituminösen Dämpfen (7), die das Einbaumaterial entgegen einer Fahrtrichtung (R) der Straßenbaumaschine (1) aus dem Materialbehälter (5, 5') transportiert, und/oder zum Besprühen von aus einem Materialbehälter (5) eines der Straßenbaumaschine (1) folgenden Straßenfertigers (2) aufsteigenden, bituminösen Dämpfen (7) ausgebildet ist.

## Beschreibung

Die vorliegende Erfindung betrifft eine Straßenbaumaschine gemäß Anspruch 1. Ferner bezieht sich die Erfindung auf ein Verfahren für einen Materialübergabeprozess gemäß dem unabhängigen Anspruch 14.

EP3276081A1 offenbart einen Straßenfertiger mit einer Sprühvorrichtung zum Besprühen bituminöser Dämpfe im Bereich der Querverteilung von Einbaumaterial vorderhalb einer am Straßenfertiger befestigten Einbaubohle. Das Besprühen bituminöser Dämpfe im Bereich der Querverteilung kann verhindern, dass bitumenhaltige Aerosole aus dem Bereich der Querverteilung auf den offen ausgebildeten Bedienstand des Straßenfertigers steigen. Bitumenhaltige Dämpfe, die an anderen Stellen des Straßenfertigers entstehen, lassen sich jedoch mittels der oberhalb der Querverteiler-Anordnung positionierten Sprühvorrichtung nicht besprühen.

Aufgabe der Erfindung ist es eine Straßenbaumaschine sowie ein Verfahren dahingehend zu verbessern, dass sich mittels einfacher konstruktiver technischer Mittel eine Ausbreitung bituminöser Dämpfe besser verhindern lässt.

Diese Aufgabe wird gelöst mittels einer Straßenbaumaschine nach Anspruch 1 sowie anhand eines Verfahrens gemäß dem unabhängigen Anspruch 14.

Vorteilhafte Weiterbildungen der Erfindung sind durch die jeweiligen Gegenstände der Unteransprüche gegeben.

Die erfindungsgemäße Straßenbaumaschine liegt in Form eines Straßenfertigers oder in Form eines Beschickerfahrzeugs zum Versorgen eines Straßenfertigers mit Einbaumaterial vor. Die erfindungsgemäße Straßenbaumaschine umfasst einen Materialbehälter zur Aufnahme von Einbaumaterial sowie mindestens eine Sprühvorrichtung zum Zerstäuben einer Flüssigkeit. Bei der Erfindung ist vorgesehen, dass die Sprühvorrichtung zum Besprühen von aus dem Materialbehälter aufsteigenden, bituminösen Dämpfen, zum Besprühen von aus einem an einer Materialförderbandeinrichtung gebildeten Bereich aufsteigenden, bituminösen Dämpfen, die das Einbaumaterial entgegen einer Fahrtrichtung der Straßenbaumaschine aus dem Materialbehälter transportiert, und/oder zum Besprühen von aus einem Materialbehälter eines der Straßenbaumaschine folgenden Straßenfertigers aufsteigenden, bituminösen Dämpfen ausgebildet ist.

Für diese Funktion ist bei der Erfindung die Sprühvorrichtung dem Materialbehälter und/oder der Materialförderbandeinrichtung zugeordnet, wo es im Betrieb der Straßenbaumaschine zu einer erhöhten Dampfentwicklung kommen kann. Eine erhöhte Dampfentwicklung kommt insbesondere beim Übergeben von Einbaumaterial in den Materialbehälter, bspw. bei einem Materialübergabeprozess mittels eines vor dem Materialbehälter geschobenen LKWs, vor, wenn das heiße Einbaumaterial vom LKW in den Materialbehälter geschüttet wird. Die erfindungsgemäße Sprühvorrichtung kann deshalb insbesondere während des Materialübergabeprozesses eingesetzt werden, um die dabei aufsteigenden, bituminösen Dämpfe anhand des von ihr eingedüsten Sprühnebels, beispielsweise ein Wassernebel, niederzuschlagen, sodass darin enthaltene Aerosole nicht weiter bis auf den (Fahrer-)Bedienstand oder in den Bereich anderer Bedienstellen, beispielsweise in den Bereich eines Bohlenbedienstands, steigen können.

Eine erhöhte Dampfentwicklung im Materialbehälter eines Straßenfertigers kommt insbesondere auch beim Beschicken des Straßenfertigers mittels eines vorausfahrenden Beschickerfahrzeugs zustande, wenn das heiße Einbaumaterial vom Beschickerfahrzeug in den Materialbehälter des Straßenfertigers fällt. Auch hierbei lässt sich die erfindungsgemäße Sprühvorrichtung wirksam einsetzen, um die beim Beschickungsvorgang entstehenden Dämpfe niederzuschlagen.

Außerdem kann die erfindungsgemäße Sprühvorrichtung dafür eingesetzt werden, um beim Durchmischen des im Materialbehälter bevorrateten Einbaumaterials entstehende Dämpfe zu besprühen, sprich auch unabhängig davon, ob ein Materialübergabeprozess stattfindet.

Demzufolge ist die erfindungsgemäße Sprühvorrichtung für unterschiedliche Szenarien im Baustellenbetrieb einsetzbar, um wirksam Dämpfe vom Bedienpersonal fernzuhalten, indem sich damit bituminöse Dämpfe am Ort einer erhöhten Dampfentwicklung besprühen lassen.

Vorzugsweise weist die Sprühvorrichtung mindestens eine direkt am Materialbunker ausgebildete oder daran befestigte Düse auf. Über eine Wand des Materialbehälters, beispielsweise über eine darin verlegte Leitung, kann die Düse mit einer Flüssigkeit, beispielsweise mit Wasser, versorgt werden. Denkbar wäre es, dass die Düse an einem oberen Rand des Materialbehälters, insbesondere am oberen Rand einer kippbaren Bunkerhälfte des Materialbehälters, angeordnet ist, vorzugsweise daran baulich integriert ist.

Gemäß einer Ausführungsform der Erfindung liegt der Materialbehälter als abnehmbarer Aufsatzbehälter oder als fest an der Straßenbaumaschine verbauter Gutbunker mit kippbaren Bunkerhälften vor. Als Aufsatzbehälter ist der Materialbehälter zur Aufnahme einer größeren Menge an Einbaumaterial ausgebildet. Dafür kann der Aufsatzbehälter mit höheren Bordwänden ausgestattet sein als ein an der Straßenbaumaschine vorhandener Gutbunker, in welchen der Aufsatzbehälter eingesetzt ist.

Eine Variante sieht vor, dass der Materialbehälter, insbesondere dann, wenn er als Aufsatzbehälter vorliegt, zumindest teilweise die Sprühvorrichtung ausbildet, wobei die Sprühvorrichtung mittels eines Generators der Straßenbaumaschine mit Strom versorgt werden kann oder batteriebetrieben ist. Gemäß einer Variante können sämtliche Fluidleitungen der Sprühvorrichtung am Materialbehälter, insbesondere innerhalb einer daran vorgesehenen Doppelwandung, verlegt sein.

Denkbar wäre es, dass der Aufsatzbehälter eine dem Fahrerbedienstand der Straßenbaumaschine zugewandte Rückwand aufweist, an der mindestens eine Düse der Sprühvorrichtung angeordnet ist. Von der Rückwand des Aufsatzbehälters aus lässt sich ein Sprühbild aus zerstäubter Flüssigkeit wie eine Decke über das in den Aufsatzbehälter fallende Einbaumaterial ausbilden, um dabei entstehende Dämpfe zu bedecken und zu verhindern, dass sie aus dem Aufsatzbehälter steigen.

Eine Variante sieht vor, dass die Sprühvorrichtung mindestens eine an einer Motorhaube der Straßenbaumaschine angebrachte Düse aufweist. Diese Düse kann in einer dafür in der Motorhaube ausgebildeten Öffnung aufgenommen sein. Insbesondere ist die Düse an einem dem Gutbunker zugewandten und diesen überragenden, senkrechten Abschnitt der Motorhaube vorgesehen. Damit lassen sich die im Gutbunker aufsteigenden bituminösen Dämpfe mit einer zerstäubten Flüssigkeit besprühen. Insbesondere kann die in der Motorhaube ausgebildete Düse derart positioniert sein, dass das durch sie erzeugte Sprühbild dicht oberhalb des Gutbunkers erzeugt wird, um die darin aufsteigenden Dämpfe zu bedecken, bevor sie aus dem Gutbunker steigen.

Gemäß einer Ausführungsform ist die Düse als Fächerdüse ausgebildet. Eine solche Düse kann direkt am Materialbehälter angeordnet oder innerhalb eines in der Motorhaube oberhalb des Gutbunkers ausgebildeten Schlitzes aufgenommen sein. Damit lässt sich als Sprühbild ein horizontaler Sprühnebel oberhalb dem aufgenommenen Einbaumaterial erzeugen.

Vorteilhaft ist es, wenn die Düse derart am Materialbehälter und/oder an der Motorhaube ausgebildet ist, dass die eingesprühte Flüssigkeit von einem aus der Motorhaube ausströmenden Kühlluftstrom erfasst und bereichsweise über dem Materialbehälter verteilt wird, um ein flächenmäßig vergrößertes Nebelfeld zum Niederschlagen aufsteigender Dämpfe zu erzeugen.

Insbesondere ist es hilfreich, wenn sich die Düse zum Erzeugen eines Sprühbilds einsetzen lässt, welches unterhalb eines aus der Motorhaube in Fahrtrichtung oberhalb des Materialbehälters austretenden Kühlluftstroms liegt. Die mittels der Düse erzeugte Einnebelung kann gemeinsam mit dem darüber liegenden Kühlluftstrom zu einer verstärkten Abschirmung der Dämpfe führen.

Vorzugsweise weist die Sprühvorrichtung mindestens eine zum Ausbilden verschiedener Sprühbilder und/oder zum Ausbilden verschiedener Strömungsrichtungen verstellbare Düse auf. Denkbar wäre es, dass sich die Düse automatisch in Abhängigkeit einer Stellung der Gutbunkerhälften verstellt. Hierbei wäre eine Anpassung der Sprühweite des durch sie erzeugten Sprühbilds und/oder eine Anpassung ihrer Ausrichtung denkbar, um nicht gegen die gekippten Bunkerhälften zu sprühen bzw. um auch bei gekippten Gutbunkerhälften ein waagrechtes Besprühen zu ermöglichen.

Gemäß einer Ausführungsform der Erfindung weist die Sprühvorrichtung mindestens einen Tank zur Aufnahme einer Flüssigkeit sowie eine Pumpe auf, die entweder innerhalb eines Motorraums der Straßenbaumaschine aufgenommen sind oder als Nachrüstset an der Straßenbaumaschine werkzeuglos lösbar befestigt sind. Bei einer Ausführungsform, bei welcher der Materialbehälter als Aufsatzbehälter vorliegt, können der Tank sowie die Pumpe der Sprühvorrichtung im Aufsatzbehälter integriert sein, sprich als Komponenten des Aufsatzbehälters vorliegen. Denkbar wäre es bei dieser Variante, dass ein Aufnahmevolumen des Tanks zumindest teilweise durch eine Wand des Aufsatzbehälters begrenzt ist.

Vorzugsweise verfügt die Sprühvorrichtung über einen Tank zur Aufnahme einer Flüssigkeit, insbesondere Wasser, die zum Besprühen der bituminösen Dämpfe verwendet wird und über einen gesonderten, weiteren Tank zur Aufnahme einer anderen Flüssigkeit, beispielsweise eines Reinigungsmittels, welche nicht zum Besprühen der bituminösen Dämpfe verwendet wird.

Zweckmäßig wäre es, die Sprühvorrichtung über eine Energieversorgung der Straßenbaumaschine anzutreiben. Alternativ dazu wäre eine autarke Energieversorgung vorstellbar. Beispielsweise wird die Sprühvorrichtung von einem Generator der Straßenbaumaschine mit Strom versorgt oder ist batteriebetrieben ausgebildet.

Gemäß einer Ausführungsform ist vorgesehen, dass die Materialförderbandeinrichtung als Längsfördereinrichtung des Straßenfertigers oder als Schwenkfördereinrichtung des Beschickerfahrzeugs vorliegt, wobei die Sprühvorrichtung zum Besprühen eines zwischen hintereinander angeordneten Förderbändern der Schwenkfördereinrichtung gebildeten Übergabebereichs konfiguriert ist und/oder zum Besprühen eines am Auslauf des als Abwurfband konfigurierten Förderbands der Schwenkfördereinrichtung gebildeten Abwurfbereichs konfiguriert ist. An derartigen Materialübergabebereichen kann es an einem Beschickerfahrzeug zu einer erhöhten Dampfentwicklung kommen, weil das Einbaumaterial dort eine gewisse Fallhöhe hat, um weitertransportiert zu werden.

Vorzugsweise weist die Sprühvorrichtung eine Temperiereinheit zum Temperieren, insbesondere zum Kühlen, der Sprühflüssigkeit auf und/oder eine Messeinrichtung zum Erfassen einer Aerosolbelastung mindestens eines der besprühbaren Bereiche. Mittels aktiv gekühlter Flüssigkeit kann ein Sprühnebel erzeugt werden, anhand dessen sich die Dämpfe schneller abkühlen, d.h. darin enthaltene Aerosole sich besser binden lassen. Die Aerosolbelastung lässt sich bspw. mittels einer optischen Messeinrichtung erfassen, insbesondere einer Messeinrichtung, die direkt am Materialbehälter angebracht ist. Denkbar wäre es, dass die Messeinrichtung dafür benutzt werden kann, um eine Luftfeuchtigkeit in der Umgebung der Straßenbaumaschine zu erfassen, um in Abhängigkeit davon eine Sprühleistung der Sprühvorrichtung einstellen zu können.

Vorstellbar wäre es, dass die Messeinrichtung Bestandteil einer mobilen Bedieneinheit der Sprühvorrichtung vorliegt. Denkbar wäre allerdings ebenso eine mobile Bedieneinheit für die Sprühvorrichtung, die ohne Messeinrichtung ausgestattet ist.

Denkbar wäre es, dass die Sprühvorrichtung als Drohne vorliegt, sprich durch mindestens einen unbemannten Flugkörper gebildet ist. Diese Drohne kann auch ergänzend zu einer stationär an der Straßenbaumaschine angeordneten Sprühvorrichtung zum Einsatz kommen. In Form einer Drohne kann die Sprühvorrichtung an verschiedenen Stellen der Straßenbaumaschine und sogar an verschiedenen Straßenbaumaschinen eines Einbauzugs zum Einsatz kommen, um vor allem die aus dem Materialbehälter aufsteigenden bituminösen Dämpfe mittels einer in der Drohne bevorrateten Flüssigkeit zu besprühen.

Denkbar wäre es, dass die Drohne unterhalb eines Dachs der Straßenbaumaschine, bspw. in einer dort vorgesehenen (Lade-)Station, geparkt ist, und bei einem Materialübergabeprozess, insbesondere dann, wenn ein LKW Einbaumaterial in den Materialbehälter der Straßenbaumaschine schüttet, oder bei einem kontinuierlichen Beschickungsvorgang zum Einsatz kommt, um die aus dem Materialbehälter aufsteigenden, bituminösen Dämpfe zu besprühen.

Gemäß einer Variante können Messungen, in deren Abhängigkeit das Besprühen mittels der Drohne durchführbar ist, direkt von der Drohne ausgeführt werden, selbst dann, wenn sie unterhalb des Dachs geparkt ist. Beispielweise kann die Drohne zum Erfassen der Aerosolbelastung im Bereich des Materialbehälters ausgebildet sein.

Vorstellbar wäre es, dass die Sprühvorrichtung mindestens eine Schlauchtrommel sowie eine mit einem auf der Schlauchtrommel aufgenommenen Schlauch verbindbare bzw. verbundene Düse aufweist. Von der Schlauchtrommel, die beispielsweise im Motorraum aufgenommen ist, lässt sich der Schlauch so weit abziehen, dass sich die Düse an einer gewünschten Stelle im Bereich des Materialbehälters befestigen lässt, bspw. durch einen werkzeuglosen Schnellverschluss, vorzugsweise direkt am oberen Rand des Materialbehälters. Diese Düse kann auch als Reinigungsdüse eingesetzt werden, um nach Beendigung eines Betriebs der Straßenbaumaschine, d.h. nach einer Einbau- bzw. Beschickungsfahrt, zum Saubermachen der Straßenbaumaschine eingesetzt zu werden. Dafür kann die Düse zum Erzeugen verschiedener Sprühbilder konfiguriert sein. Für Reinigungszwecke kann die Sprühvorrichtung ein Reinigungsmittel verwenden, das in einem gesonderten Tank bevorratet ist. Zum Besprühen der bituminösen Dämpfe wird das Reinigungsmittel allerdings nicht eingesetzt. Vielmehr wird für diesen Zweck eine andere Flüssigkeit verwendet, beispielsweise Wasser, das in einem Wassertank der Sprühvorrichtung aufgenommen ist.

Gemäß einer Variante ist der Schlauch so weit von der Schlauchtrommel abziehbar, dass er sich mit einer am Aufsatzbehälter angeordneten Düse, insbesondere mit einer daran integral verbauten Düse, verbinden lässt. Bei dieser Variante liefert der Aufsatzbehälter die Düse zum Verbinden mit den ansonsten gesondert zum Aufsatzbehälter an der Straßenbaumaschine angeordneten Komponenten der Sprühvorrichtung.

Vorstellbar ist es, dass die Sprühvorrichtung durch ein die Straßenbaumaschine begleitendes Tankfahrzeug mit Sprühflüssigkeit versorgt wird. Die Straßenbaumaschine und das Tankfahrzeug können in Einbaurichtung nebeneinander fahren.

Gemäß einer Variante umfasst die Sprühvorrichtung mindestens eine Düse zum Besprühen einer aus abgesaugten, bituminösen Dämpfen erzeugten Abluftströmung. Insbesondere kann diese Düse auf einer Überdruck erzeugenden Ausstoßseite eines Ventilationssystems eingesetzt werden, um die am Ausgang des Ventilationssystems ausgestoßene Abluftströmung zu besprühen. Die abgesaugten Dämpfe stammen insbesondere aus einem Bereich der Querverteilung vorderhalb der Einbaubohle.

Ferner bezieht sich die Erfindung auf einen Einbauzug mit mindestens einer erfindungsgemäßen Straßenbaumaschine, insbesondere mit mindestens einem erfindungsgemäßen Straßenfertiger und mit mindestens einem in Produktionsrichtung dem Straßenfertiger vorausfahrenden und diesen mit Einbaumaterial versorgenden Beschickerfahrzeug, insbesondere einem erfindungsgemä-ßen Beschickerfahrzeug. In einem solchen Einbauzug können vorzugsweise die jeweiligen Teilnehmer, d.h. sowohl der Straßenfertiger als auch das vorausfahrende Beschickerfahrzeug mit einer erfindungsgemäßen Sprühvorrichtung ausgestattet sein, um aus den jeweiligen Materialbehältern dieser Fahrzeuge aufsteigende, bituminöse Dämpfe mit zerstäubter Flüssigkeit zu besprühen.

Insbesondere kann die Sprühvorrichtung des vorausfahrenden Beschickerfahrzeugs derart am Abwurfband ausgebildet sein, dass sie von dort aus die aus dem Materialbehälter des folgenden Straßenfertigers aufsteigenden, bituminösen Dämpfe besprühen kann. Dieser Straßenfertiger käme dann sogar ohne eigene Sprühvorrichtung aus, um die Dämpfe aus dem Materialbehälter niederzuschlagen, sprich zu verhindern, dass sie sich am Straßenfertiger weiter ausbreiten.

Eine Variante sieht vor, dass am Einbauzug mindestens eine als Drohne ausgebildete Sprühvorrichtung zum Einsatz kommt, um zumindest die aus den Materialbehältern aufsteigenden Dämpfe mit zerstäubter Flüssigkeit zu besprühen. Dies kann beispielsweise im Wechsel zwischen den Fahrzeugen geschehen, je nachdem an welcher im Einbauzug die Dampfbelastung am höchsten ausfällt.

Die Erfindung bezieht sich ferner auf ein Verfahren für einen Materialübergabeprozess zum Versorgen eines Straßenfertigers und/oder eines Beschickerfahrzeugs mit Einbaumaterial. Erfindungsgemäß werden aus einem Materialbehälter des Straßenfertigers und/oder Beschickerfahrzeugs, und/oder aus einem an einer Materialförderbandeinrichtung gebildeten Bereich, die das Einbaumaterial aus dem Materialbehälter transportiert, aufsteigende, bituminöse Dämpfe zumindest temporär während des Materialübergabeprozesses mittels einer zerstäubten Flüssigkeit besprüht. Beim Materialübergabeprozess, vor allem dort, wo Einbaumaterial zwischen Fahrzeugen übergeben wird, beispielsweise von einem LKW in ein Beschickerfahrzeug oder direkt vom LKW in einen Straßenfertiger geschüttet wird, ist die bituminöse Dampfentwicklung im Bereich des Materialbehälters besonders intensiv, sodass das Besprühen der dabei entstehenden Dämpfe zum Vermeiden einer Ausbreitung der Dämpfe wirksam ist.

Für das Besprühen aufsteigender, bituminöser Dämpfe wird vorzugsweise mindestens eine am Straßenfertiger angeordnete Sprühvorrichtung, mindestens eine am Beschickerfahrzeug angeordnete Sprühvorrichtung, und/oder mindestens eine Drohne eingesetzt.

Vorstellbar wäre es, dass sich bei einem Einbauzug die als Drohne konfigurierte Sprühvorrichtung gemäß einem automatisierten Flugablauf bewegt, wobei sie sich im Bereich des Materialbehälters des Beschickerfahrzeugs befindet, wenn in diesen von einem LKW Einbaumaterial geschüttet wird, um die an diesem Materialbehälter durch das Abschütten des Einbaumaterials verursachte, verstärkte Dampfentwicklung zu besprühen, beispielsweise solange wie der LKW von einem Abdruckbalken des Beschickerfahrzeugs geschoben wird, und wobei die Drohe im Anschluss daran entgegen der Produktionsrichtung des Einbauzugs automatisch in einen Bereich weiterfliegt, an welchem Einbaumaterial von einem Abwurfband des Beschickerfahrzeugs in den Materialbehälter des hinterherfahrenden Straßenfertigers fällt, um die dort aus dem Materialbehälter des Straßenfertigers aufsteigenden, bituminösen Dämpfe zu besprühen.

Eine Variante sieht vor, dass die Drohne als Helferdrohne eine am Straßenfertiger und/oder am Beschickerfahrzeug zum Besprühen von Dämpfen aus dem Materialbehälter eingesetzte Sprühvorrichtung unterstützt, insbesondere dann, wenn es dort zu einer erhöhten Dampfentwicklung kommt.

Die Erfindung wird anhand von in den Figuren gezeigten Ausführungsbeispielen genauer erläutert. Es zeigen:
- Figur 1: eine Straßenbaumaschine in Form eines Straßenfertigers mit einer Sprühvorrichtung,
- Figur 2: eine Straßenbaumaschine in Form eines Straßenfertigers mit einer als Drohne gebildeten Sprühvorrichtung,
- Figur 3: eine ausschnittsweise Frontalansicht eines Straßenfertigers mit hochgeklappten Gutbunkerhälften,
- Figur 4: eine Straßenbaumaschine in Form eines Straßenfertigers mit einem Aufsatzbehälter im Gutbunker,
- Figur 5: eine Straßenbaumaschine in Form eines Beschickerfahrzeugs mit einer Sprühvorrichtung, und
- Figur 6: eine Straßenbaumaschine in Form eines Beschickerfahrzeugs mit einer Sprühvorrichtung.

Gleiche technische Merkmale sind in den Figuren durchgehend mit denselben Bezugszeichen versehen.

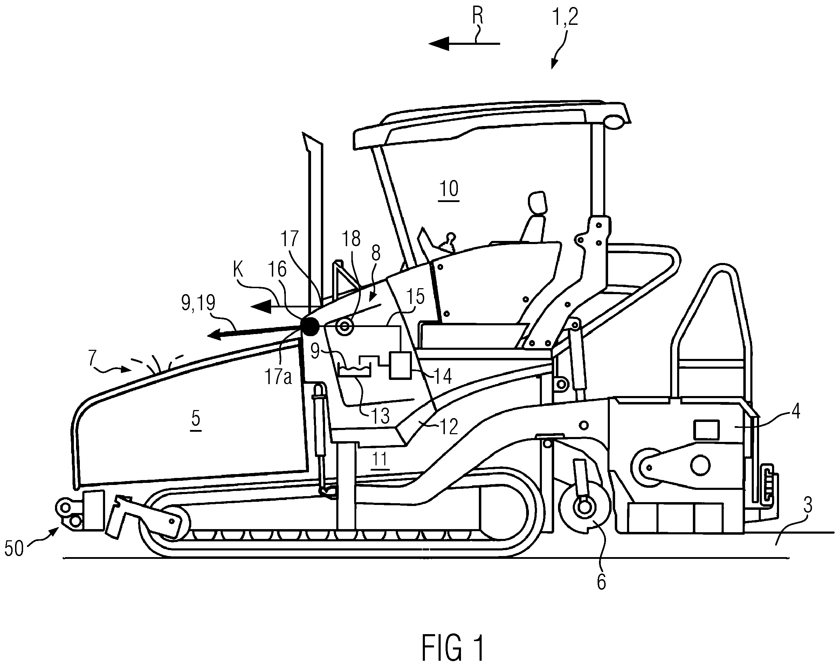

Figur 1 zeigt eine Straßenbaumaschine 1, die als Straßenfertiger 2 zur Herstellen einer neuen Einbauschicht 3 konfiguriert ist. Zum Herstellen der Einbauschicht 3 weist der Straßenfertiger 2 eine Einbaubohle 4 auf, die aus einem Materialbehälter 5 heraus mit Einbaumaterial versorgt wird. Aus dem Materialbehälter 5 wird das Einbaumaterial entgegen einer Fahrtrichtung R des Straßenfertigers 2 mittels einer nicht gezeigten Materialförderbandeinrichtung, die als Längsfördereinrichtung unterhalb des Fahrerbedienstands vorliegt, zu einer vorderhalb der Einbaubohle 4 gelagerten Querverteilerschnecke 6 transportiert und von dieser ausgebreitet. Gemäß Figur 1 ist der Materialbehälter 5 als Gutbunker am Straßenfertiger 2 ausgebildet.

Aus dem Materialbehälter 5 steigen Dämpfe 7, die bituminöse Aerosole aufweisen. Der Straßenfertiger 2 aus Figur 1 verfügt über eine Sprühvorrichtung 8, die zum Besprühen der Dämpfe 7 mit einer zerstäubten Flüssigkeit 9 vorgesehen ist. Dabei kann es sich um Wassernebel handeln, um die in den Dämpfen 7 enthaltenen Aerosole niederzuschlagen bzw. einzunebeln. Mit dadurch zunehmender Tröpfchenbildung können die in den aus dem Materialbehälter 5 aufsteigenden Dämpfen 7 enthaltenen bituminösen Aerosole gebunden werden, womit sich verhindern lässt, dass sie sich weiter ausbreiten, insbesondere kann verhindert werden, diese sie bis auf einen Bedienstand 10 des Straßenfertigers 2 schweben.

Gemäß Figur 1 ist die Sprühvorrichtung 8 innerhalb eines Motorraums 11 des Straßenfertigers 2 verbaut. Alternativ dazu käme ein modularer Anbau in Frage, gemäß welchem die Sprühvorrichtung 8 als modulares Nachrüstset vorliegt, sprich als Modul lösbar am Straßenfertiger 2 im Bereich des Materialbehälters 5 befestigt ist und sich für einen autarken Betrieb eignet.

Ferner zeigt Figur 1 eine Seitenverkleidung 12 des Motorraums 11, welche sich wie eine Tür öffnen lässt, um Zugang zu der Sprühvorrichtung 8 zu bekommen. Die Sprühvorrichtung 8 verfügt über einen Tank 13 zur Aufnahme der Flüssigkeit 9, beispielsweise einen Wassertank. Ferner verfügt die Sprühvorrichtung 8 über eine Pumpe 14, die dazu konfiguriert ist, aus dem Tank 13 die Flüssigkeit 9 zu pumpen und über eine Leitung 15 zu einer Düse 16 zu fördern, die als Zerstäuberdüse konfiguriert ist, insbesondere als Flachdüse bzw. Fächerdüse.

Die Düse 16 aus Figur 1 ist derart an einer Motorhaube 17, insbesondere an einem vertikalen Abschnitt 17a der Motorhaube 17, angeordnet, dass die die zerstäubte Flüssigkeit 9 oberhalb des Materialbehälters 5 in Fahrtrichtung R aussprühen kann.

Gemäß Figur 1 umfasst die Sprühvorrichtung 8 eine Schlauchtrommel 18, die innerhalb des Motorraums 11 positioniert ist. Die Schlauchtrommel 18 ist mit der Pumpe 14 über die Leitung 15 verbunden. Dank der Schlauchtrommel 18 lässt sich die Düse 16 aus der Motorhaube 17 herausziehen, um bspw. zum Reinigen des Straßenfertigers 2 genutzt werden zu können. Alternativ dazu kann die in Figur 1 gezeigte Sprühvorrichtung 8 allerdings in einer vereinfachten Bauweise auch ohne Schlauchtrommel 18 ausgebildet sein, sodass die Düse 16 fest in der Motorhaube 17 verbaut ist bzw. daran fest angeordnet ist.

Gemäß Figur 1 kann ein aus der zerstäubten Flüssigkeit 9 gebildetes Sprühbild 19 unterhalb einem aus der Motorhaube 17 ausströmenden Kühlluftstrom K gebildet sein. Dies kann den Effekt, die Dämpfe 7 vom Bedienstand 10 fernzuhalten, weiter verstärken. Der Kühlluftstrom K kann mittels mindestens einer in der Motorhaube 17 gebildeten Strömungsrippe in Fahrtrichtung R gelenkt werden, damit er das Sprühbild 19 bedeckt.

Für einen Materialübergabeprozess verfügt der Straßenfertiger 2 über einen Abdruckbalken 50, an welchem ein LKW im Leerlauf mit seinen Hinterreifen andocken kann, um Einbaumaterial in den Materialbehälter 5 zu schütten. Während des Materialübergabeprozesses kann der LKW vom Straßenfertiger 2 in Fahrtrichtung R geschoben werden.

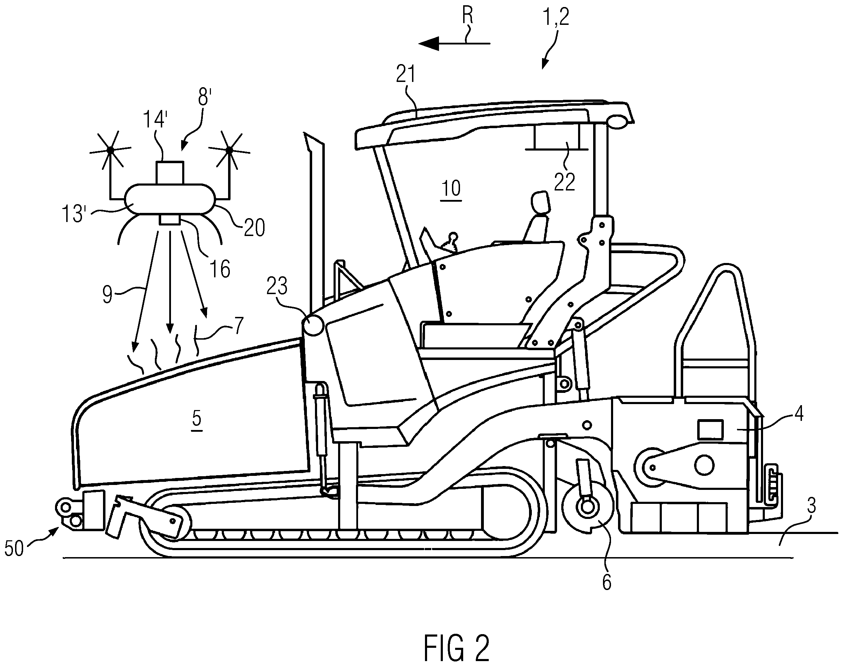

Figur 2 zeigt die Straßenbaumaschine 1 in Form eines Straßenfertigers 2 mit einer Sprühvorrichtung 8, die als Drohne 20 vorliegt. Die Drohne 20 verfügt über einen Tank 13' mit Flüssigkeit 9 sowie über mindestens eine Düse 16 zum Zerstäuben der Flüssigkeit 9. Zum Fördern der Flüssigkeit 9 aus dem Tank 13' zur Düse 16 ist die Drohne 20 mit einer Pumpe 14' ausgestattet.

Die Drohne 20 kann insbesondere während des Materialübergabeprozesses oberhalb des Materialbehälters 5 fliegen, um von oben die aufsteigenden Dämpfe 7 mit zerstäubter Flüssigkeit 9 zu besprühen, sodass in den Dämpfen 7 enthaltene bituminöse Aerosole mit zunehmender Tröpfchenbildung gebunden werden, d.h. sich nicht weiter ausbreiten können.

Die in Figur 2 in Form einer Drohne 20 konfigurierte Sprühvorrichtung 8' kann als Helferdrohne ergänzend zu der in Figur 1 gezeigten Sprühvorrichtung 8 zum Einsatz kommen. Am Straßenfertiger 2 aus Figur 2 ist an einem Dach 21 des Straßenfertigers eine Station 22 für die Drohne 20 vorgesehen, die insbesondere als Ladestation vorliegt. In dieser kann die Drohne 20 verweilen, wenn sie nicht zum Besprühen von Dämpfen 7 benötigt wird. Dagegen verlässt die Drohne 20 die Station 22, wenn sie beispielsweise als Helferdrohne benötigt wird, um die Sprühvorrichtung 8 zu unterstützen.

Ferner zeigt Figur 2 eine Messeinrichtung 23, die im Bereich des Materialbehälters 5 angeordnet ist, um eine Aerosolbelastung der aufsteigenden Dämpfe 7 zu erfassen. Die Messeinrichtung 23 kann an der Motorhaube 17 des Straßenfertigers 2 platziert sein. Alternativ dazu kann die Drohne 20 die Messeinrichtung 23 aufweisen, um eine Aerosolbelastung der aufsteigenden Dämpfe 7 zu erfassen.

Basierend auf den Messwerten der Messeinrichtung 23 kann der Einsatz der als Drohne 20 vorliegenden Sprühvorrichtung 8' aus Figur 2 und/oder der Einsatz der in Figur 1 gezeigten Sprühvorrichtung 8 gesteuert werden. Die Messeinrichtung 23 kann auch zum Erfassen einer Luftfeuchtigkeit konfiguriert sein, sodass bei relativ hoher erfasster Luftfeuchtigkeit die Drohne 20 nicht zum Besprühen der aufsteigenden Dämpfe 7 zum Einsatz kommt.

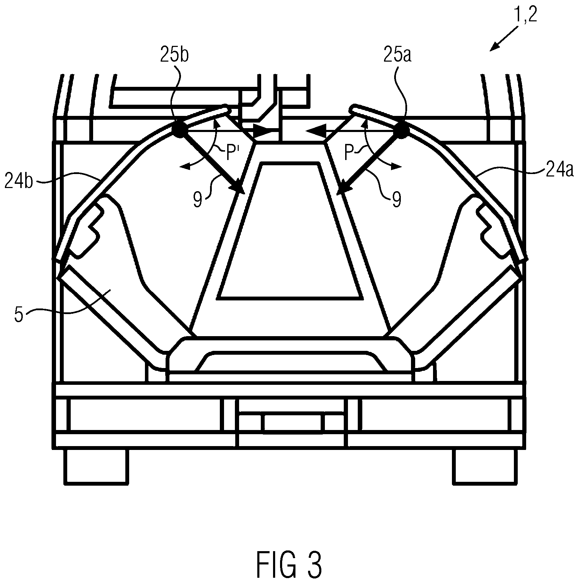

In der Frontalansicht aus Figur 3 werden Gutbunkerhälften 24a, 24b des Materialbehälters 5 gezeigt, die hochgeklappt sind, um Einbaumaterial aus Randbereichen in die Mitte zu verlagern. Die Gutbunkerhälften 24a, 24b verfügen über Düsen 25a, 25b, anhand derer sich zerstäubte Flüssigkeit 9 in den Aufnahmebereich des Materialbehälters 5 eindüsen lässt. Durch jeweilige Doppelpfeile P, P' wird in Figur 3 schematisch gezeigt, dass sich die Düsen 25a, 25b zum Aufrechterhalten einer waagrechten Eindüsung der zerstäubten Flüssigkeit 9 verstellen lassen, insbesondere automatisch dafür verstellbar sind, um besser verhindern zu können, dass bituminöse Aerosole aus dem Materialbehälter 5 heraussteigen.

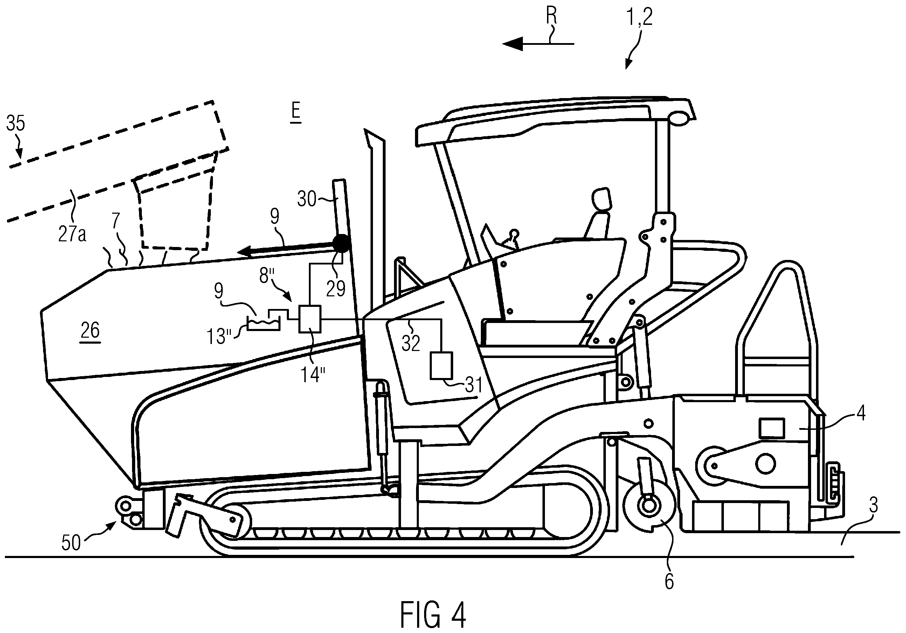

Figur 4 zeigt den Straßenfertiger 2, an welchem der Materialbehälter 5 als Aufsatzbehälter 26 vorliegt, der in den Gutbunker des Straßenfertigers 2 eingesetzt ist. Der Aufsatzbehälter 26 ist dank seiner im Vergleich zum Gutbunker erhöhten Bordwände zur Aufnahme einer größeren Menge an Einbaumaterial geeignet.

In den Aufsatzbehälter 26 fällt von einem als Schwenkband konfigurierten Abwurfband 27a eines vorausfahrenden Beschickerfahrzeugs 35 Einbaumaterial, sodass Dämpfe 7 im Abwurfbereich entstehen.

Der Aufsatzbehälter 26 ist gemäß Figur 4 als Sprühvorrichtung 8" konfiguriert, um die aus ihm aufsteigenden Dämpfe 7 zu besprühen. Dafür verfügt der Aufsatzbehälter 26 über eine Düse 29, die gemäß Figur 4 in einer Rückwand 30 des Aufsatzbehälters 26 ausgebildet ist. Die durch den Aufsatzbehälter 26 gebildete Sprühvorrichtung 8" wird von einem Generator 31 des Straßenfertigers 2 über eine elektrische Leitung 32 mit Strom versorgt. Eine gemäß Figur 4 im Aufsatzbehälter 26 integrierte Pumpe 14" kann über die Leitung 32 mittels des Generators 31 elektrisch betrieben werden, um die Flüssigkeit 9 aus einem am Aufsatzbehälter 26 vorgesehenen Tank 13" zur Düse 29 zu fördern.

Denkbar wäre es, dass der Aufsatzbehälter 26 ohne die Sprühvorrichtung 8" vorliegt, wobei die aus ihm aufsteigenden Dämpfe 7 mittels der in Figur 2 gezeigten Drohne 20 besprüht werden und/oder die mit der Schlauchtrommel 18 verbundene Düse 16 aus der Motorhaube 17 herausgezogen und am Aufsatzbehälter 26 an dessen Rückwand 30 befestigt wird, um die Dämpfe 7 zu besprühen.

Vorstellbar wäre es, dass sich die im Aufsatzbehälter 26 vorgesehene Düse 29 mit dem Schlauch der Schlautrommel 18 verbinden lässt, sprich die Sprühvorrichtung 8 aus Figur 1 mit der Düse 29 des Aufsatzbehälters 26 verbindbar ist, um Dämpfe 7 zu besprühen.

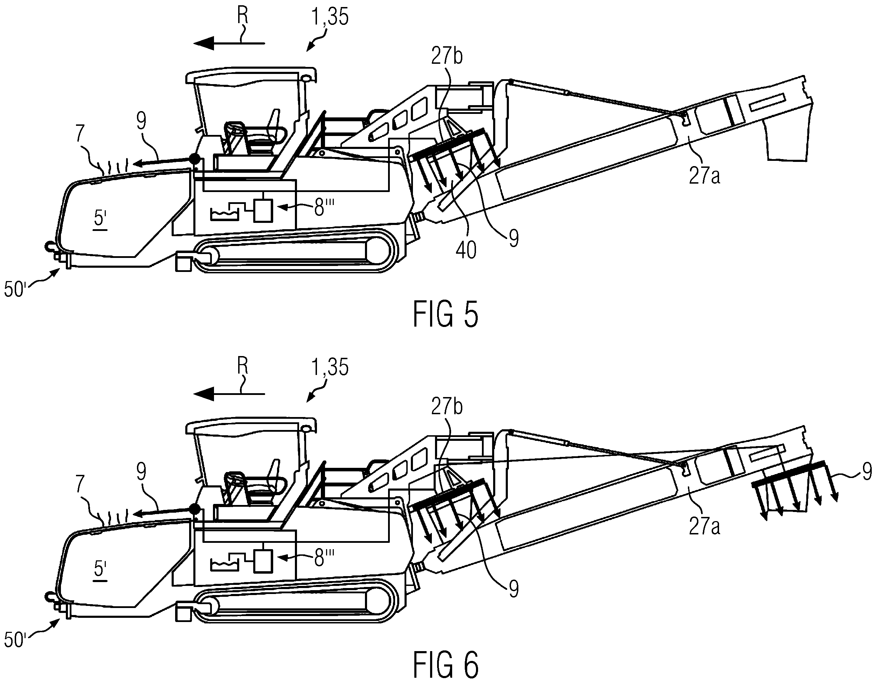

Figur 5 zeigt die Straßenbaumaschine 1 in Form eines Beschickerfahrzeugs 35, welches zum Versorgen eines in Fahrtrichtung R hinterherfahrenden Straßenfertigers 2 mit Einbaumaterial konfiguriert ist, um einen Einbauzug E (siehe Figur 4) zu bilden.

Das Beschickerfahrzeug 35 aus Figur 5 weist einen Materialbehälter 5' auf. Aus dem Materialbehälter 5' wird das Einbaumaterial entgegen der Fahrtrichtung R des Beschickerfahrzeugs 35 mittels einer Materialförderbandeinrichtung, die als Schwenkfördereinrichtung vorliegt, transportiert. Die Materialförderbandeinrichtung des Beschickerfahrzeugs 35 verfügt über ein Förderband 27b, von welchem das Einbaumaterial aus dem Materialbunker 5' heraustransportiert und an ein als Schwenkband konfiguriertes Abwurfband 27a übergeben wird. Mittels einer am Beschickerfahrzeug 35 ausgebildeten Sprühvorrichtung 8‴ können die aus dem Materialbehälter 5' aufsteigenden Dämpfe 7 mit zerstäubter Flüssigkeit 9 besprüht werden, insbesondere dann, wenn ein mittels des Abdruckbalkens 50' geschobener LKW Einbaumaterial in den Materialbehälter 5' schüttet.

Gemäß Figur 5 ist die Sprühvorrichtung 8‴ auch zum Besprühen eines zwischen dem Förderband 27b und dem als Schwenkband konfigurierten Abwurfband 27a gebildeten Übergabebereichs 40 mit zerstäubter Flüssigkeit 9, da es auch dort zu einer erhöhten Dampfentwicklung kommen kann.

Des Weiteren kann die Sprühvorrichtung 8‴ dazu konfiguriert sein, gemäß einer in Figur 6 gezeigten Ausführung am Auslauf des Abwurfbands 27a zerstäubte Flüssigkeit 9 einzudüsen, um dort existierende Dämpfe 7, die aus dem Materialbehälter 5 eines nachfolgenden Straßenfertigers 2 steigen, zu besprühen.

## Patentansprüche

1. Straßenbaumaschine (1), die in Form eines Straßenfertigers (2) oder in Form eines Beschickerfahrzeugs (35) zum Versorgen eines Straßenfertigers (2) mit Einbaumaterial konfiguriert ist, wobei die Straßenbaumaschine (1) einen Materialbehälter (5, 5') zur Aufnahme von Einbaumaterial sowie mindestens eine Sprühvorrichtung (8, 8', 8", 8‴) zum Zerstäuben einer Flüssigkeit (9) umfasst, **dadurch gekennzeichnet, dass** die Sprühvorrichtung (8, 8', 8", 8‴)
a) zum Besprühen von aus dem Materialbehälter (5, 5') aufsteigenden, bituminösen Dämpfen (7),
b) zum Besprühen von aus einem an einer Materialförderbandeinrichtung gebildeten Bereich aufsteigenden, bituminösen Dämpfen (7), die das Einbaumaterial entgegen einer Fahrtrichtung (R) der Straßenbaumaschine (1) aus dem Materialbehälter (5, 5') transportiert, und/oder
c) zum Besprühen von aus einem Materialbehälter (5) eines der Straßenbaumaschine (1) folgenden Straßenfertigers (2) aufsteigenden, bituminösen Dämpfen (7)
ausgebildet ist.

2. Straßenbaumaschine nach Anspruch 1, **dadurch gekennzeichnet, dass** die Sprühvorrichtung (8) mindestens eine direkt am Materialbehälter (5) ausgebildete und/oder daran befestigte Düse (25a, 25b) aufweist.

3. Straßenbaumaschine nach Anspruch 1 oder 2, **dadurch gekennzeichnet, dass** der Materialbehälter (5) als abnehmbarer Aufsatzbehälter (26) oder als fest an der Straßenbaumaschine (1) verbauter Gutbunker mit kippbaren Bunkerhälften (24a, 24b) vorliegt.

4. Straßenbaumaschine nach einem der vorangehenden Ansprüche, **dadurch gekennzeichnet, dass** die Sprühvorrichtung (8) mindestens eine an einer Motorhaube (17) der Straßenbaumaschine (1) angebrachte Düse (16) aufweist.

5. Straßenbaumaschine nach Anspruch 4, **dadurch gekennzeichnet, dass** sich die Düse (16) zum Erzeugen eines Sprühbilds einsetzen lässt, welches unterhalb eines aus der Motorhaube (17) in Fahrtrichtung (R) oberhalb des Materialbehälters (5, 5`) austretenden Kühlluftstroms (K) liegt.

6. Straßenbaumaschine nach einem der vorangehenden Ansprüche, **dadurch gekennzeichnet, dass** die Sprühvorrichtung (8) mindestens eine zum Ausbilden verschiedener Sprühbilder und/oder zum Ausbilden verschiedener Strömungsrichtungen verstellbare Düse (16, 25a, 25b) aufweist.

7. Straßenbaumaschine nach einem der vorangehenden Ansprüche, **dadurch gekennzeichnet, dass** die Sprühvorrichtung (8, 8', 8", 8‴) mindestens einen Tank (13, 13', 13") sowie eine Pumpe (14, 14', 14") aufweist, die insbesondere entweder innerhalb eines Motorraums (11) der Straßenbaumaschine (1) aufgenommen sind oder als Nachrüstset an der Straßenbaumaschine (1) werkzeuglos lösbar befestigt sind.

8. Straßenbaumaschine nach einem der vorangehenden Ansprüche, **dadurch gekennzeichnet, dass** die Sprühvorrichtung (8, 8', 8", 8‴) über eine Energieversorgung der Straßenbaumaschine (1) antreibbar ist oder über eine autarke Energieversorgung verfügt.

9. Straßenbaumaschine nach einem der vorangehenden Ansprüche, **dadurch gekennzeichnet, dass** die Materialförderbandeinrichtung als Längsfördereinrichtung des Straßenfertigers (2) oder als Schwenkfördereinrichtung des Beschickerfahrzeugs (35) vorliegt, wobei die Sprühvorrichtung (8, 8', 8", 8‴) zum Besprühen eines zwischen hintereinander angeordneten Förderbändern (27a, 27b) der Schwenkfördereinrichtung gebildeten Übergabebereichs (40) konfiguriert ist und/oder zum Besprühen eines am Auslauf des als Abwurfband konfigurierten Förderbands (27a) der Schwenkfördereinrichtung gebildeten Abwurfbereichs konfiguriert ist.

10. Straßenbaumaschine nach einem der vorangehenden Ansprüche, **dadurch gekennzeichnet, dass** die Sprühvorrichtung (8, 8', 8", 8‴) eine Temperiereinheit zum Temperieren der Flüssigkeit aufweist und/oder eine Messeinrichtung (23) zum Erfassen einer Aerosolbelastung mindestens eines der besprühbaren Bereiche aufweist.

11. Straßenbaumaschine nach einem der vorangehenden Ansprüche, **dadurch gekennzeichnet, dass** die Sprühvorrichtung (8`) als Drohne (20) vorliegt.

12. Straßenbaumaschine nach einem der vorangehenden Ansprüche, **dadurch gekennzeichnet, dass** die Sprühvorrichtung (8) mindestens eine Schlauchtrommel (18) sowie eine mit einem auf der Schlauchtrommel (18) aufgenommenen Schlauch verbundene Düse (16) aufweist.

13. Einbauzug mit mindestens einer Straßenbaumaschine (1) gemäß einem der vorausgehenden Ansprüche, insbesondere mit mindestens einem Straßenfertiger (2) und mindestens einem in Produktionsrichtung (R) dem Straßenfertiger (2) vorausfahrenden und diesen mit Einbaumaterial versorgenden Beschickerfahrzeug (35).

14. Verfahren für einen Materialübergabeprozess zum Versorgen eines Straßenfertigers (2) und/oder eines Beschickerfahrzeugs (35) mit Einbaumaterial, **dadurch gekennzeichnet, dass** aus einem Materialbehälter (5, 5') des Straßenfertigers (2) und/oder Beschickerfahrzeugs (35), und/oder aus einem an einer Materialförderbandeinrichtung gebildeten Bereich, die das Einbaumaterial aus dem Materialbehälter (5, 5') transportiert, aufsteigende, bituminöse Dämpfe (7) zumindest temporär während des Materialübergabeprozesses mittels einer zerstäubten Flüssigkeit (9) besprüht werden.

15. Verfahren nach Anspruch 14, **dadurch gekennzeichnet, dass** beim Materialübergabeprozess
a. mindestens eine am Straßenfertiger (2) angeordnete Sprühvorrichtung (8, 8"),
b. mindestens eine am Beschickerfahrzeug (35) angeordnete Sprühvorrichtung (8‴), und/oder
c. mindestens eine als Drohne (20) gebildete Sprühvorrichtung (8`)
eingesetzt wird.

## Geänderte Patentansprüche

### Geänderte Patentansprüche gemäss Regel 137(2) EPÜ.

1. Straßenbaumaschine (1), die in Form eines Straßenfertigers (2) oder in Form eines Beschickerfahrzeugs (35) zum Versorgen eines Straßenfertigers (2) mit Einbaumaterial konfiguriert ist, wobei die Straßenbaumaschine (1) einen Materialbehälter (5, 5') zur Aufnahme von Einbaumaterial sowie mindestens eine Sprühvorrichtung (8, 8', 8", 8‴) zum Zerstäuben einer Flüssigkeit (9) umfasst, **dadurch gekennzeichnet, dass** die Sprühvorrichtung (8, 8', 8'', 8‴)
a) zum Besprühen von aus dem Materialbehälter (5, 5') aufsteigenden, bituminösen Dämpfen (7),
b) zum Besprühen von aus einem an einer Materialförderbandeinrichtung gebildeten Bereich aufsteigenden, bituminösen Dämpfen (7), die das Einbaumaterial entgegen einer Fahrtrichtung (R) der Straßenbaumaschine (1) aus dem Materialbehälter (5, 5') transportiert, wobei die Materialförderbandeinrichtung als Schwenkfördereinrichtung des Beschickerfahrzeugs (35) vorliegt, und wobei die Sprühvorrichtung (8, 8', 8", 8‴) zum Besprühen eines zwischen hintereinander angeordneten Förderbändern (27a, 27b) der Schwenkfördereinrichtung gebildeten Übergabebereichs (40) konfiguriert ist und/oder zum Besprühen eines am Auslauf des als Abwurfband konfigurierten Förderbands (27a) der Schwenkfördereinrichtung gebildeten Abwurfbereichs konfiguriert ist, und/oder
c) zum Besprühen von aus einem Materialbehälter (5) eines der Straßenbaumaschine (1) folgenden Straßenfertigers (2) aufsteigenden, bituminösen Dämpfen (7) ausgebildet ist.

2. Straßenbaumaschine nach Anspruch 1, **dadurch gekennzeichnet, dass** die Sprühvorrichtung (8) mindestens eine direkt am Materialbehälter (5) ausgebildete und/oder daran befestigte Düse (25a, 25b) aufweist.

3. Straßenbaumaschine nach Anspruch 1 oder 2, **dadurch gekennzeichnet, dass** der Materialbehälter (5) als abnehmbarer Aufsatzbehälter (26) oder als fest an der Straßenbaumaschine (1) verbauter Gutbunker mit kippbaren Bunkerhälften (24a, 24b) vorliegt.

4. Straßenbaumaschine nach einem der vorangehenden Ansprüche, **dadurch gekennzeichnet, dass** die Sprühvorrichtung (8) mindestens eine an einer Motorhaube (17) der Straßenbaumaschine (1) angebrachte Düse (16) aufweist.

5. Straßenbaumaschine nach Anspruch 4, **dadurch gekennzeichnet, dass** sich die Düse (16) zum Erzeugen eines Sprühbilds einsetzen lässt, welches unterhalb eines aus der Motorhaube (17) in Fahrtrichtung (R) oberhalb des Materialbehälters (5, 5') austretenden Kühlluftstroms (K) liegt.

6. Straßenbaumaschine nach einem der vorangehenden Ansprüche, **dadurch gekennzeichnet, dass** die Sprühvorrichtung (8) mindestens eine zum Ausbilden verschiedener Sprühbilder und/oder zum Ausbilden verschiedener Strömungsrichtungen verstellbare Düse (16, 25a, 25b) aufweist.

7. Straßenbaumaschine nach einem der vorangehenden Ansprüche, **dadurch gekennzeichnet, dass** die Sprühvorrichtung (8, 8', 8", 8‴) mindestens einen Tank (13, 13', 13") sowie eine Pumpe (14, 14', 14") aufweist, die insbesondere entweder innerhalb eines Motorraums (11) der Straßenbaumaschine (1) aufgenommen sind oder als Nachrüstset an der Straßenbaumaschine (1) werkzeuglos lösbar befestigt sind.

8. Straßenbaumaschine nach einem der vorangehenden Ansprüche, **dadurch gekennzeichnet, dass** die Sprühvorrichtung (8, 8', 8", 8‴) über eine Energieversorgung der Straßenbaumaschine (1) antreibbar ist oder über eine autarke Energieversorgung verfügt.

9. Straßenbaumaschine nach einem der vorangehenden Ansprüche, **dadurch gekennzeichnet, dass** die Sprühvorrichtung (8, 8', 8", 8‴) eine Temperiereinheit zum Temperieren der Flüssigkeit aufweist und/oder eine Messeinrichtung (23) zum Erfassen einer Aerosolbelastung mindestens eines der besprühbaren Bereiche aufweist.

10. Straßenbaumaschine nach einem der vorangehenden Ansprüche, **dadurch gekennzeichnet, dass** die Sprühvorrichtung (8') als Drohne (20) vorliegt.

11. Straßenbaumaschine nach einem der vorangehenden Ansprüche, **dadurch gekennzeichnet, dass** die Sprühvorrichtung (8) mindestens eine Schlauchtrommel (18) sowie eine mit einem auf der Schlauchtrommel (18) aufgenommenen Schlauch verbundene Düse (16) aufweist.

12. Einbauzug mit mindestens einer Straßenbaumaschine (1) gemäß einem der vorausgehenden Ansprüche, insbesondere mit mindestens einem Straßenfertiger (2) und mindestens einem in Produktionsrichtung (R) dem Straßenfertiger (2) vorausfahrenden und diesen mit Einbaumaterial versorgenden Beschickerfahrzeug (35).

13. Verfahren für einen Materialübergabeprozess zum Versorgen eines Straßenfertigers (2) und/oder eines Beschickerfahrzeugs (35) mit Einbaumaterial, **dadurch gekennzeichnet, dass** aus einem Materialbehälter (5, 5') des Straßenfertigers (2) und/oder Beschickerfahrzeugs (35), und/oder aus einem an einer als Schwenkfördereinrichtung des Beschickerfahrzeugs (35) konfigurierten Materialförderbandeinrichtung, die das Einbaumaterial aus dem Materialbehälter (5, 5') transportiert, gebildeten Bereich, der als Übergabebereich (40) zwischen hintereinander angeordneten Förderbändern (27a, 27b) der Schwenkfördereinrichtung gebildet ist und/oder als Abwurfbereich eines am Auslauf des als Abwurfband konfigurierten Förderbands (27a) der Schwenkfördereinrichtung gebildet ist, aufsteigende, bituminöse Dämpfe (7) zumindest temporär während des Materialübergabeprozesses mittels einer zerstäubten Flüssigkeit (9) besprüht werden.

14. Verfahren nach Anspruch 13, **dadurch gekennzeichnet, dass** beim Materialübergabeprozess
a) mindestens eine am Straßenfertiger (2) angeordnete Sprühvorrichtung (8, 8"),
b) mindestens eine am Beschickerfahrzeug (35) angeordnete Sprühvorrichtung (8'"), und/oder
c) mindestens eine als Drohne (20) gebildete Sprühvorrichtung (8') eingesetzt wird.
